**Europäisches Patentamt**

**European Patent Office**

**Office européen des brevets**

(11) Veröffentlichungsnummer: **0 342 551**

**A2**

## (12) EUROPÄISCHE PATENTANMELDUNG

(21) Anmeldenummer: 89108620.9

(22) Anmeldetag: 12.05.89

(51) Int. Cl.⁴: **F16B 5/12 , F16B 2/22 , F16B 2/24**

(30) Priorität: 17.05.88 DE 3816781

(43) Veröffentlichungstag der Anmeldung:
23.11.89 Patentblatt 89/47

(84) Benannte Vertragsstaaten:
ES FR

(71) Anmelder: TFA-DOSTMANN GMBH & CO. KG

D-6980 Wertheim-Reicholzheim(DE)

(72) Erfinder: Stiller, Gerhard
Gaissbergstrasse 5
D-6983 Kreuzwertheim(DE)

(74) Vertreter: Grams, Klaus Dieter, Dipl.-Ing. et al
Patentanwaltsbüro Tiedtke-Bühling-Kinne-
Grupe-Pellmann-Grams-Struif Winter-Roth
Bavariaring 4
D-8000 München 2(DE)

(54) **Klemmvorrichtung für schlanke Körper an einem Träger.**

(57) Eine Klemmvorrichtung zur Befestigung von schlanken Körpern, insbesondere Thermometer-Glasröhrchen, an einem Träger umfaßt einen Clip, der eine den schlanken Körper auf der Trägervorderseite umfassende Öse und einen durch ein Loch im Träger steckbaren Hals aufweist. Der Hals hat einen Quersteg, der zur Abstützung des Clips auf der Trägerrückseite dient. Der Quersteg oder der Hals können als Federelement ausgebildet sein, wobei der Quersteg vorteilhafterweise als bogenförmige Blattfeder ausgebildet ist oder der Hals aus einem elastisch verformbaren Material besteht. Der Clip kann als ein etwa T-förmiges Kunststoffteil ausgebildet sein, das ein flaches Plättchen mit einer Durchgangsöffnung aufweist, an dem der Quersteg bogenförmig angeformt ist. Zur Erleichterung des Einsetzens des schlanken Körpers sollte die Öse ein Langloch aufweisen, dessen Länge zumindest etwas größer als der Durchmesser des schlanken Körpers ist. Alternativ dazu kann der Clip einstückig aus einem Metallband gebogen sein, indem das Metallband zu einem offenen Haken als Öse mit geradem Hals und einem quer zur Ebene der Öse verlaufenden, zunächst zu einer Seite der Öse und dann zu deren anderer Seite umgebogenen Bügel als Quersteg gebogen ist. Darüber hinaus kann der Bügel von der anderen Seite zurück zum Hals und weiter zu einem dem Haken gegenüberliegende Gegenhaken gebogen sein.

FIG. 3

## Klemmvorrichtung für schlanke Körper an einem Träger

Die Erfindung bezieht sich auf eine Klemmvorrichtung für schlanke Körper, insbesondere für Thermometer-Glasröhrchen, an einem Träger gemäß dem Oberbegriff des Anspruchs 1.

Da die Erfindung insbesondere in Verbindung mit Thermometer-Glasröhrchen angewendet werden soll, wird sie im folgenden in Zusammenhang mit einem derartigen Glasröhrchen erläutert.

Ein Thermometer-Glasröhrchen wird üblicherweise mindestens an seinem oberen und seinem unteren Ende an einem Träger mittels Clips angebracht. Dazu wird ein im wesentlichen U-förmiger Clip verwendet, der eine das Glasröhrchen auf der Trägervorderseite umfassende Öse und einen durch ein Loch im Träger steckbaren Hals besitzt, der auf der Trägerrückseite einen Quersteg zur Abstützung hat. Bei dieser bekannten Klemmvorrichtung wird bei der Montage des Glasröhrchens dieses auf dem Träger positioniert und von der Vorderseite des Trägers wird der Hals des Clips durch das Loch hindurchgesteckt, wobei der U-förmige Basisabschnitt des Clips das Glasröhrchen umgreift. Anschließend werden am Hals des Clips angebrachte Abschnitte umgebogen, so daß zwei flanschartige Stege gebildet sind, die auf der Rückseite des Trägers anliegen und den Clip in seiner Position halten. Zum Umbiegen der Abschnitte wird ein spezielles Werkzeug benötigt, und es ist notwendig, das Glasröhrchen während der Montage festzuhalten. Wenn es nötig sein sollte, das Glasröhrchen auszuwechseln, muß der Hals aufgebogen werden, um das Glasröhrchen vom Träger lösen zu können. Auf diese Weise ist sowohl die Montage als auch die ggf. notwendige Demontage des Glasröhrchens umständlich und zeitaufwendig. Darüber hinaus kann zwischen dem Glasröhrchen und dem Träger Spiel auftreten, wodurch eine ausreichende Zuverlässigkeit der gegenseitigen Befestigung nicht gewährleistet ist.

Der Erfindung liegt die Aufgabe zugrunde, einen Clip zu schaffen, mit dem das Glasröhrchen in einfacher und zuverlässiger Weise an einen Träger befestigt und von diesem gelöst werden kann.

Diese Aufgabe wird erfindungsgemäß durch die Klemmvorrichtung gemäß Anspruch 1 gelöst.

Da der Quersteg oder der Hals des Clips als Federelement ausgebildet sind, kann der Clip am Träger angebracht werden, indem er von der Trägerrückseite her in das Loch eingesetzt sowie gegen den Träger gedrückt und festgehalten wird. Dadurch wird an der Vorderseite des Trägers die Öffnung der Öse freigegeben, in die das Glasröhrchen eingesteckt werden kann. Wenn nach dem Einstecken des Glasröhrchens in die Öffnung der Clip losgelassen wird, spannt er das Glasröhrchen gegen die Vorderseite des Trägers, so daß dieses dank der Federwirkung des Clips sicher befestigt ist. Dadurch kann die Verbindung in einfacher Weise hergestellt und jederzeit gelöst werden, ohne daß dazu ein spezielles Werkzeug notwendig ist.

Vorteilhafte Weiterbildungen der Erfindung sind Gegenstand der Unteransprüche.

Die Erfindung wird im folgenden anhand der Zeichnungen näher erläutert. Es zeigen:

Fig. 1 die Vorderseite eines Trägers, an dem ein Glasröhrchen mittels eines Clips gemäß einem Ausführungsbeispiel der Erfindung befestigt ist, in perspektivischer Darstellung,

Fig. 2 die Rückseite des Trägers gemäß Fig. 1,

Fig. 3 den Clip in perspektivischer Darstellung,

Fig. 4 einen Schnitt entlang der Linie A-A in Fig. 1 vor der Montage des Glasröhrchens,

Fig. 5 einen Schnitt entlang der Linie B-B in Fig. 1 vor der Montage des Glasröhrchens,

Fig. 6 einen Schnitt längs der Linie A-A in Fig. 1 während des Einsetzens des Glasröhrchens,

Fig. 7 einen Schnitt entlang der Linie B-B in Fig. 1 während des Einsetzens des Glasröhrchens,

Fig. 8 einen Schnitt entlang der Linie A-A in Fig. 1 im befestigten Zustand des Glasröhrchens,

Fig. 9 einen Schnitt entlang der Linie B-B in Fig. 1 im befestigten Zustand des Glasröhrchens,

Fig. 10 ein zweites Ausführungsbeispiel des Clips in perspektivischer Darstellung,

Fig. 11 ein drittes Ausführungsbeispiel des Clips in perspektivischer Darstellung und

Fig. 12 ein viertes Ausführungsbeispiel des Clips in perspektivischer Darstellung.

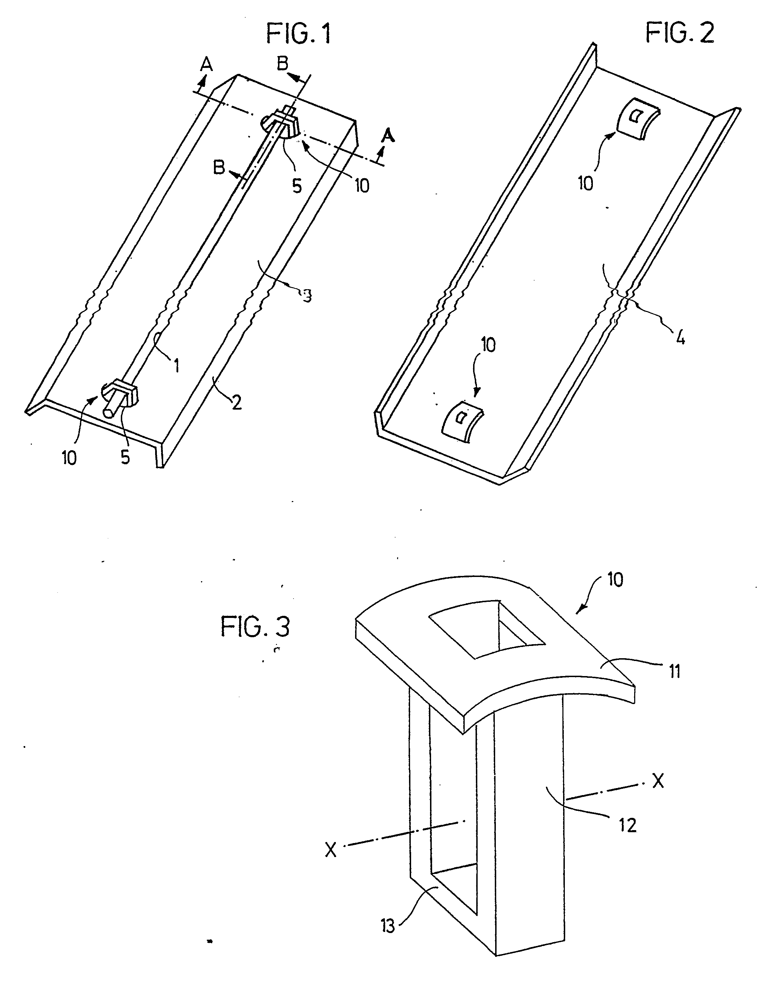

Wie in Fig. 1 gezeigt ist, weist ein plattenartiger Träger 2 in seinen Endbereichen jeweils ein Loch 5 auf, durch das eine Klammer bzw. ein Clip 10 von einer Rückseite 4 des Trägers 2 hindurchgesteckt ist. Auf einer Vorderseite 3 des Trägers 2, der einen trapezförmigen Querschnitt hat, ist ein schlanker, im wesentlichen stabförmiger Körper, beispielsweise ein Glasröhrchen 1 eines Thermometers oder eine Kapillare, mit Hilfe der Clips 10 befestigt.

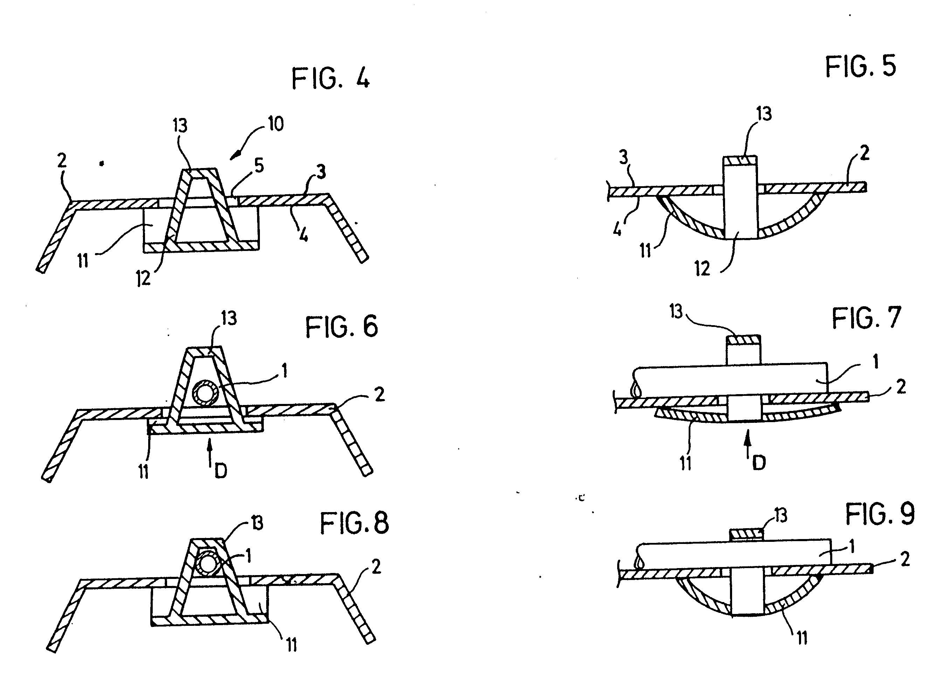

Der in Fig. 3 dargestellte Clip 10 weist einen Quersteg 11, der als Federelement in Form einer bogenförmigen Blattfeder ausgebildet ist, einen Hals 12 und eine Öse 13 auf. Der Quersteg 11 besteht aus einem elastischen Werkstoff, vorzugsweise einem Kunststoff, so daß er nach Art einer Feder verformbar ist. Aus herstellungstechnischen Gründen ist es dabei wünschenswert, den gesamten Clip 10 aus einem einheitlichen Werkstoff herzustellen. Zur Erhöhung der Federwirkung ist der Quersteg 11 bogenförmig gekrümmt, wobei seine konvex gekrümmte Oberfläche der Rückseite 4 des Trägers 2 abgewandt ist. Der zweiteilige Hals 12, der sich von der inneren, konkav gekrümmten Oberfläche des bogenförmigen Querstegs 2 aus erstreckt und zwei im wesentlichen symmetrische Schenkel aufweist, geht in Schenkel der Öse 13 über, die eine Durchgangsöffnung in Form eines Langlochs aufweist, durch die das Glasröhrchen 1 in Richtung der Achse x-x hindurchgesteckt wird. Die Öse 13 verläuft im wesentlichen rechtwinklig zum Quersteg 11. Das Glasröhrchen 1 weist einen Durchmesser P auf, der kleiner als die in Längsrichtung des Halses 12 gemessene Länge der Durchgangsöffnung bzw. des Langlochs der Öse 13 ist, wie in Fig. 6 dargestellt ist.

Im folgenden wird anhand der Fig. 4 bis 9 die Montage des Glasröhrchens 1 in ihren einzelnen Schritten näher erläutert.

Zuerst werden der Hals 12 und die Öse 13 des Clips 10 von der Rückseite 4 des Trägers 2 durch das Loch 5 hindurchgesteckt, wie es in den Fig. 4 und 5 gezeigt ist. In diesem Zustand befindet sich dasjenige Ende des Halses 12, das mit dem Quersteg 11 nicht verbunden ist, d. h. das freie Ende des Halses 12, auf der Vorderseite 3 des Trägers 2, während das mit dem Quersteg 11 verbundene Ende des Halses 12 und der Quersteg 11 auf der Rückseite 4 des Trägers 2 angeordnet sind. Dabei kommen Endbereiche des Querstegs 11 in Anlage mit der Rückseite 4 des Trägers 2. Zur weiteren Montage wird der Clip 10 gemäß den Fig. 6 und 7 nach oben gedrückt, indem der Quersteg 11 mit einer Druckkraft D beaufschlagt oder der Hals 12 von der Vorderseite 3 des Trägers 2 gemäß den Figuren nach oben gezogen wird. Der Quersteg 11 nimmt dabei in seiner Einstellung eine im wesentlichen ebene Form an und kommt annähernd vollflächig mit der Rückseite 4 des Trägers 2 in Anlage. In diesem Zustand wird das Glasröhrchen 1 angebracht, indem es durch die Öse 13 hindurchgeschoben wird. Da die Durchgangsöffnung der Öse 13 trapezförmig ausgebildet ist und ihre Öffnungsbreite in Richtung auf den Quersteg 11 allmählich größer wird, kann das Einschieben des Glasröhrchens 11 in einfacher Weise erfolgen. Anschließend wird der Clip 10 losgelassen und durch die Federwirkung des Querstegs 11 gemäß den Fig. 8 und 9 nach unten bewegt, da die gemäß den Fig. 6 und 7 vorhandene Druckkraft D nicht mehr wirksam ist. Die nach unten gerichtete Bewegung des Clips 10 ist durch die Anlage der Öse 13 an das Glasröhrchen 1 begrenzt. Das Glasröhrchen 1 ist in der Öse 13 gehalten und wird gegen die Vorderseite 3 des Trägers 2 gespannt und ist auf diese Weise an diesem befestigt.

Zum Lösen der Verbindung wird der Clip 10 gemäß den Figuren nach oben gedrückt, wodurch die Verspannung des Glasröhrchens 1 mit dem Träger 2 aufgehoben ist und das Glasröhrchen 1 entnommen werden kann.

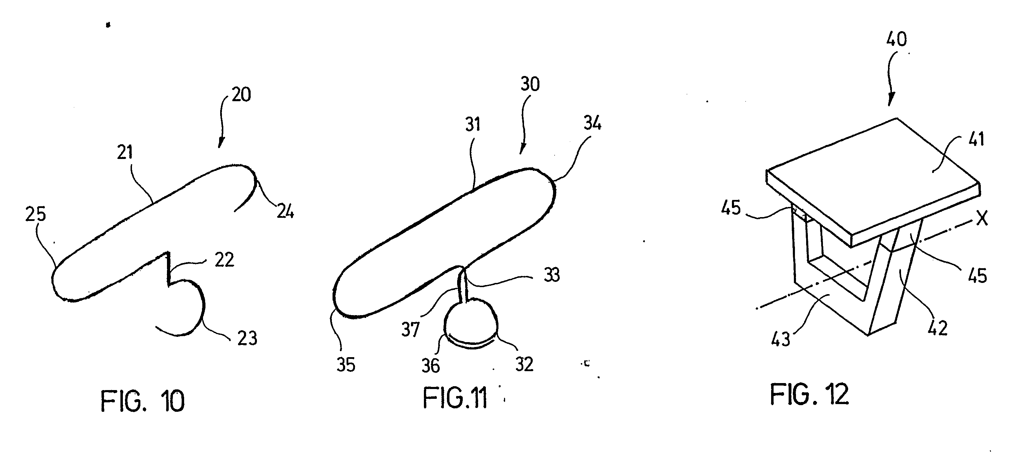

Fig. 10 zeigt einen Clip 20 gemäß einem zweiten Ausführungsbeispiel, wobei der Clip 20 aus einem einstückigen, federelastischen Metallband besteht, das in gewünschter Weise gebogen ist. Der Clip 20 weist einen bügelförmigen Quersteg 21, der im wesentlichen bogenförmig ist, und einen im wesentlichen geraden Hals 22 auf, der sich an den Quersteg 21 anschließt. Ein Endabschnitt 24 des Querstegs 21 ist zur Vermeidung von Verletzungen eines Benutzers umgebogen. Am anderen Ende 25 des Querstegs 21 ist das Metallband ebenfalls umgebogen und verläuft im wesentlichen parallel zum Quersteg 21 bis zu dessen Mittelbereich zurück, wo es in den Hals 22 übergeht. Der Hals 22 verläuft im wesentlichen rechtwinklig zum Quersteg 21 und geht an seinem gemäß Fig. 10 unteren Ende in einen offenen Haken 23 über, der eine Öse zum Durchstecken des Glasröhrchens 1 in Richtung der Achse x-x bildet. Die Öse 26 definiert eine Ebene, die im wesentlichen rechtwinklig zum Quersteg 21 verläuft. Die Montage des Glasröhrchens 1 am Träger 2 mittels der Clips 20 erfolgt in der zuvor beschriebenen Weise, so daß an dieser Stelle nicht mehr darauf eingegangen werden soll.

Fig. 11 zeigt einen Clip 30 gemäß einem dritten Ausführungsbeispiel, der den Clip 20 des zweiten Ausführungsbeispiels ähnlich ist. Der Clip 30, der ebenfalls aus einem Metallband besteht, besitzt einen Quersteg 31 der im wesentlichen bogenförmig ist. Zur Ausbildung des Clips 30 werden beide Endabschnitte 34 und 35 des Querstegs 31 umgebogen und bis zum Mittelbereich des Querstegs 31 zurückgeführt, wo sie jeweils in einen Hals 33 bzw. 37 übergehen. Die Hälse 33 und 37 verlaufen im wesentlichen rechtwinklig zum Quersteg 31. Am gemäß Fig. 11 unteren Ende der Hälse 33 und 37 schließen sich ein offener Haken 32 bzw. ein offener Gegenhaken 36 an, der in der gleichen Ebene wie der Haken 32 liegt. Der Haken 32 und der Gegenhaken 36 verlaufen im wesentlichen rechtwinklig zum Quersteg 31 und bilden eine Öse, die annähernd kreisförmig ist. Das Glasröhrchen 1 wird mittels der Clips 30 ebenfalls in der zuvor beschriebenen Weise am Träger 2 befestigt. Gegenüber dem Clip 20 gemäß dem zweiten Ausführungsbeispiel weist der Clip 30 den Vorteil auf, daß die Federkraft gleichmäßig über den Quersteg 31 wirkt.

Fig. 12 zeigt einen Clip 40 gemäß einem vierten Ausführungsbeispiel, der einen im wesentlichen ebenen Quersteg 41 aufweist. Abschnitte 45 des Halses 42 bestehen aus einem hochelastischen Werkstoff, so daß mittels einer Dehnung der Abschnitte 45 eine Federkraft erzeugt werden kann. Zur Montage des Glasröhrchens 1 wird der Clip 40 in das Loch 5 auf der Rückseite 4 des Trägers 2 eingesetzt, so daß der Hals 42 auf der Vorderseite 3 des Trägers 2 hervorsteht. Der Benutzer ergreift den vorstehenden Teil des Halses 42 und zieht ihn gemäß Fig. 12 nach unten. Dadurch werden die elastischen Abschnitte 45 des Halses 42 gedehnt und die Öffnung der Öse 43 wird vergrößert, so daß das Glasröhrchen 1 eingesetzt werden kann. Anschließen wird der Hals 42 vom Benutzer losgelassen, wodurch er das Glasröhrchen 1 aufgrund der in den Abschnitten 45 des Halses 42 erzeugten Federkraft gegen den Träger 2 spannt.

Eine Klemmvorrichtung zur Befestigung von schlanken Körpern, insbesondere Thermometer-Glasröhrchen, an einem Träger umfaßt einen Clip, der eine den schlanken Körper auf der Trägervorderseite umfassende Öse und einen durch ein Loch im Träger steckbaren Hals aufweist. Der Hals hat einen Quersteg, der zur Abstützung des Clips auf der Trägerrückseite dient. Der Quersteg oder der Hals können als Federelement ausgebildet sein, wobei der Quersteg vorteilhafterweise als bogenförmige Blattfeder ausgebildet ist oder der Hals aus einem elastisch verformbaren Material besteht. Der Clip kann als ein etwa T-förmiges Kunststoffteil ausgebildet sein, das ein flaches Plättchen mit einer Durchgangsöffnung aufweist, an dem der Quersteg bogenförmig angeformt ist. Zur Erleichterung des Einsetzens des schlanken Körpers sollte die Öse ein Langloch aufweisen, dessen Länge zumindest etwas größer als der Durchmesser des schlanken Körpers ist.

Alternativ dazu kann der Clip einstückig aus einem Metallband gebogen sein, indem das Metallband zu einem offenen Haken als Öse mit geradem Hals und einem quer zur Ebene der Öse verlaufenden, zunächst zu einer Seite der Öse und dann zu deren anderer Seite umgebogenen Bügel als Quersteg gebogen ist. Darüber hinaus kann der Bügel von der anderen Seite zurück zum Hals und weiter zu einem dem Haken gegenüberliegende Gegenhaken gebogen sein.

## Ansprüche

1. Klemmvorrichtung für schlanke Körper, insbesondere Thermometer-Glasröhrchen, an einem Träger, mit einem Clip, der eine den Körper auf der Trägervorderseite umfassende Öse und einen durch ein Loch am Träger steckbaren Hals besitzt, der einen Quersteg zur Abstützung auf der Trägerrückseite hat, dadurch gekennzeichnet, daß der Quersteg (11; 21; 31) oder der Hals (42) als Federelement ausgebildet ist.

2. Klemmvorrichtung nach Anspruch 1, dadurch gekennzeichnet, daß der Quersteg (11) als bogenförmige Blattfeder ausgebildet ist.

3. Klemmvorrichtung nach Anspruch 1, dadurch gekennzeichnet, daß der Hals (42) aus einem elastisch verformbaren Material besteht.

4. Klemmvorrichtung nach Anspruch 1 oder 2, dadurch gekennzeichnet, daß der Clip (20; 30) einstückig aus einem Metallband gebogen ist.

5. Klemmvorrichtung nach Anspruch 4, dadurch gekennzeichnet, daß das Metallband zu einem offenen Haken (23; 32) als Öse mit geradem Hals (22; 33) und einem quer zur Ebene der Öse verlaufenden, zunächst zu einer Seite der Öse und dann zu deren anderer Seite umgebogenen Bügel als Quersteg (21; 31) gebogen ist.

6. Klemmvorrichtung nach Anspruch 5, dadurch gekennzeichnet, daß der Bügel von der anderen Seite zurück zum Hals (33) und weiter zu einem dem Haken (32)˙ gegenüberliegenden Gegenhaken (36) gebogen ist.

7. Klemmvorrichtung nach einem der Ansprüche 1 bis 3, dadurch gekennzeichnet, daß der Clip (10) ein etwa T-förmiges Kunststofformteil ist, das ein flaches Plättchen aufweist, in dem eine Durchgangsöffnung ausgebildet ist und an dem der Quersteg (11) bogenförmig angeformt ist.

8. Klemmvorrichtung nach einem der Ansprüche 1 bis 7, dadurch gekennzeichnet, daß die Öse (13; 43) ein Langloch aufweist, déssen Länge zumindest etwas größer als der Durchmesser P des schlanken Körpers (1) ist.

FIG.1

FIG.2

FIG.3

FIG. 4

FIG. 5

FIG. 6

FIG. 7

FIG. 8

FIG. 9

EP 0 342 551 A2

FIG. 10

FIG.11

FIG. 12

EP 0 342 551 A2